# EUROPÄISCHE PATENTANMELDUNG

(11) **EP 1 078 941 A1**
(43) Veröffentlichungstag der Anmeldung: **28.02.2001**
(21) Anmeldenummer: 00117246.9
(22) Anmeldetag: 14.08.2000
(51) Int. Cl.: C08F 257/02, C08F 212/08, B01J 39/20

(54) **Sulfonierte Perpolymerisate aus Styrol, Vinylpyridinen und Vernetzern**

(30) Priorität: 25.08.1999 DE 19949464
(71) Anmelder: BAYER AG, 51368 Leverkusen (DE)
(72) Erfinder: Köhler, Burkhard, Dr., 51373 Leverkusen (DE); Seidel, Rüdiger, Dr., 51375 Leverkusen (DE); Halle, Olaf, Dr., 51061 Köln (DE); Wenz, Eckhard, Dr., 50679 Köln (DE)

(57) **Zusammenfassung**

Die Erfindung betrifft sulfonierte Perlpolymerisate aus Styrol, Vinylpyridinen, weiteren Monomeren und Vernetzern, ein Verfahren zu ihrer Herstellung sowie die Verwendung als Kationenaustauscher.

## Beschreibung

Die Erfindung betrifft die Sulfonierungsprodukte der Perlpolymerisate aus Styrol, Vinylpyridinen und Vernetzern, ein Verfahren zu ihrer Herstellung sowie die Verwendung als Kationenaustauscher.

Kationenaustauscher werden in "Ion Exchange", Bd. 13 Kirk-Othmer Ency. Chem. Tech. Seite 678-705 (3. Ausgabe) beschrieben.

Ein Problem der sulfonsäurefunktionellen Kationenaustauscher ist die oxidative Degradation während des Gebrauchs unter typischen Bedingungen. Die Degradation führt zu einer Abnahme der Vernetzungsgrades, zu Verunreinigungen des zu entionisierenden Wassers und zu Korrosionsproblemen. Besonders die Leitfähigkeit des eluierten Wasser wird durch die Zersetzungsprodukte angehoben.

Die damit verbundenen Probleme und Lösungsansätze werden in der US-A 53 02 623 und der EP-A 0 366 258 beschrieben.

In der US-A 53 02 623 werden Copolymerisate beschrieben, die para-substituierte Styrole statt Styrol enthalten. Unbefriedigend bei dieser Maßnahme ist, dass das technisch sehr gut verfügbare Styrol ganz oder weitgehend durch p-Alkylstyrole ersetzt werden muss.

In der EP-A 0 366 258 werden den Kationenaustauschern phenolische Antioxidantien zugesetzt. Hierbei besteht der Nachteil, dass solche Antioxidantien selbst im Laufe der Zeit eluierbar sind.

Daher bestand die Aufgabe, oxidativ stabile lonenaustauscher herzustellen, die im wesentlichen aus Styrol bestehen und die keine niedermolekularen Zusätze enthalten.

Überraschenderweise wurde gefunden, dass die Sulfonierungsprodukte von Perlpolymerisaten aus Styrol, Vinylpyridinen, Acrylnitril und Divinylbenzol eine deutlich geringere Leitfähigkeit des eluierten Wassers ergeben, als die Sulfonierungsprodukte Vinylpyridin-freier Perlpolymerisate.

Gegenstand der Erfindung ist ein Verfahren zur Herstellung von sulfonierten Perlpolymerisaten durch
i) Ausbilden einer Suspension von Saatpolymerisat und Monomergemisch in einer kontinuierlichen wässrigen Phase, wobei das Saatpolymerisat selber durch Verdüsen von Monomergemisch aus den Komponenten A) und B) oder A) und B) und C) in einer wässrigen Phase und anschließender Polymerisation hergestellt wird, oder einer hetero- oder homodispersen Suspension von Monomergemisch durch Rühren oder Verdüsen in einer wässrigen Phase,
ii) Polymerisieren des Monomergemisches im Saatpolymerisat oder der hetero- oder homodispersen Suspension zu einem Copolymerisat und
iii) Funktionalisieren des gebildeten Copolymerisats durch Sulfonierung, dadurch gekennzeichnet, dass man als Monomerengemisch
   A) 67 bis 99,45 Gew.-%, vorzugsweise 79 bis 95,9 Gew.-% Styrol,
   B) 0,5 bis 20 Gew.-%, vorzugsweise 2 bis 12 Gew.-% Vernetzer, vorzugsweise Divinylbenzol, das als Isomerengemisch vorliegen kann und bis zu 50 Gew.-% Isomere von Ethylstyrolen und bis zu 10 Gew.-% Isomere von Diethylbenzolen enthalten kann und
   C) 0,5 bis 8 Gew.-%, vorzugsweise 1 bis 5 Gew.-% Vinylpyridine der allgemeinen Formel (I) 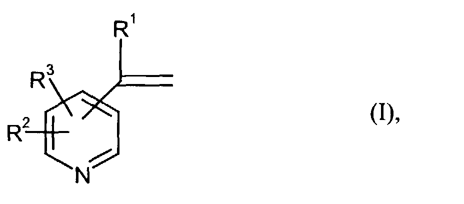 worin
      R¹ für Wasserstoff oder Methyl, vorzugsweise für Wasserstoff steht,
      R² und R³ unabhängig voneinander für Wasserstoff oder einen C₁-C₄-Alkylrest stehen, vorzugsweise für Wasserstoff stehen,
      oder wenn R² und R³ in ortho-Position zueinander stehen, diese für Glieder eines 5- bis 7-gliedrigen Rings stehen,
      und bezogen auf 100 Gew.-Teile der Mischung aus A) + B) oder A) + B) + C) 0,1 bis 1,1 Gew.-Teile Polymerisationsinitiatoren einsetzt.

Gegebenenfalls kann nach Verfahrensschritt i) das Saatpolymerisat in einem Monomerengemisch aus Vinylmonomer, Vernetzer und Radikalstarter gequollen werden.

Ein weiterer Gegenstand der Erfindung sind die Produkte, die man durch Sulfonierung der erfindungsgemäßen Polymerisate herstellt.

Ein weiterer Gegenstand der Erfindung ist die Verwendung der erfindungsgemäßen Sulfonierungsprodukte als Kationenaustauscher.

Die Herstellung der Perlpolymerisate erfolgt in wässriger Suspension nach ein- oder mehrstufigen Verfahren, wie sie in Helfferich, Ion Exchange, McGraw-Hill Book Co.. Inc., Seite 26-47 (1962), in Polymer Processes, Interscience Publishers, Inc. New York, Seite 69 bis 109, in der EP-PS 0 098 130, in der EP-PS 0 101 943, in der DE-A 198 52 667.9 und der DE-A 198 20 049.0 beschrieben sind. Der Inhalt der DE-A 198 52 667.9 wird von der vorliegenden Beschreibung mit umfasst.

Verfahren zur Sulfonierung werden in Hellferich, Ion Exchange, McGraw-Hill Book Co., Inc., Seite 26 bis 47 (1962), in der EP-A 0 826 704 und in der DE-A 198 52 667.9 beschrieben.

Komponenten B) im Sinne der Erfindung sind Di- oder Trialkenylbenzole, wie z.B. alle Isomeren des Divinylbenzols, der Trivinylbenzole, der Diisopropenylbenzole und der Triisopropenylbenzole.

Beispiele für die Komponente C) sind beispielsweise 2-Vinylpyridin, 4-Vinylpyridin, Vinylchinoline, bevorzugt 2-Vinylpyridin oder 4-Vinylpyridin.

Die Komponente C) kann homogen im gesamten Perlpolymerisat, oder bei Saat-Feed-Prozessen (Saatzulaufverfahren) in der Saat und/oder im Feed zugesetzt werden.

Neben den Komponenten A), B) und C) können gegebenenfalls weitere Monomere eingesetzt werden. Weitere Monomere im Sinne der Erfindung sind Vinylnaphthalin, Ethylstyrol, alpha-Methylstyrol, Chlorstyrole, Acrylsäure, Methacrylsäure, Acrylsäure-C₁-C₈-alkylester, Methacrylsäure-C₁-C₈-Alkylester, Acrylnitril, Methacrylnitril, Acrylamid, Methacrylamid, Vinylchlorid, Vinylidenchlorid oder Vinylacetat.

Die weiteren Monomere werden zu 0 bis 15 Gew.%, bevorzugt zu 2 bis 8 Gew.-% eingesetzt. In einer besonders geeigneten Ausführungsform werden 4 Gew.-% Acrylnitril eingesetzt.

Polymerisationsinitiatoren im Sinne der Erfindung sind die üblichen Initiatoren, die bei der radikalischen Polymerisation eingesetzt werden. Bevorzugt sind Initiatoren mit geringer Wasserlöslichkeit. Geeignete Initiatoren sind Azoverbindungen, wie z.B. Azobisisobutyronitril, Perester oder Percarbonate.

Die erfindungsgemäßen Copolymerisate aus Verfahrensschritt iii) eignen sich als Edukte zur Herstellung von Ionenaustauschern, vorzugsweise Kationenaustauschern, indem diese sulfoniert werden. Die erfindungsgemäßen Sulfonierungsprodukte eignen sich als Kationenaustauscher und sind Produkten nach dem Stand der Technik überlegen, indem sie eine deutliche Überlegenheit im Hinblick auf oxidative Degradation gegenüber Kationenaustauschern die gemäß dem Stand der Technik EP-A 0 366 258 oder US-A 5 302 623 hergestellt wurden, aufweisen.

### Beispiele

Messung der Leitfähigkeit im Eluat und der Menge an hochmolekularer Polystyrolsulfonsäure

In eine auf 70°C temperierte Glassäule von 60 cm Länge und 2 cm Durchmesser werden 100 ml nutschfeuchter Kationenaustauscher in der H-Form eingefüllt. Durch die Säule werden von oben nach unten 480 ml entionisiertes Wasser mit einer Durchflussgeschwindigkeit von 20 ml/h (0,2 Bettvolumen/h) geleitet. Vom Eluat wird die Leitfähigkeit in µS/cm gemessen. Ferner wird durch Gelpermeationschromatographie unter Verwendung von Eichsubstanzen der Gehalt an hochmolekularen Poly-styrolsulfonsäuren (Mw >4000) in mg/l gemessen.

### Beispiel 1 (erfindungsgemäß)

### a) Herstellung der Saat

Man verfährt, wie in DE-A 198 52 667.9, Beispiel 2a beschrieben.

### b) Herstellung des Perlpolymerisats

Man verfährt, wie in DE-A 198 52 667.9, Beispiel 2b beschrieben, wobei als Monomerengemisch 731 g Styrol, 119,2 g Divinylbenzol (80,6 %; Rest Ethylbenzol, Isomerengemisch) und 48 g (4 Gew.-% des Perlpolymerisats) 2-Vinylpyridin eingesetzt wird. Man erhält 1168 g eines Perlpolymerisats.

### c) Herstellung eines Kationenaustauschers durch Sulfonierung

Man verfährt, wie in DE-A 198 52 667.9, Beispiel 2c beschrieben.

Die Leitfähigkeit beträgt 92,3; der Gehalt an hochmolekularer Polystyrolsulfonsäure 0,5.

### Beispiel 2 (erfindungsgemäß)

Man verfährt, wie in Beispiel 1 beschrieben, wobei 731 g Styrol, 119,2 g Divinylbenzol und 48 g (4 Gew.-%) 4-Vinylpyridin eingesetzt werden.

Die Leitfähigkeit beträgt 77, der Gehalt an hochmolekularen Polystyrolsulfonsäuren 0,4.

### Beispiel 3 (Vergleich)

Man verfährt, wie in Beispiel 1 beschrieben, wobei 730,7 g Styrol, 48,3 g Acrylnitril und 119,2 g Divinylbenzol eingesetzt werden.

Die Leitfähigkeit beträgt 104,9, der Gehalt an hochmolekularen Polystyrolsulfonsäuren 1,4.

## Patentansprüche

1. Verfahren zur Herstellung von sulfonierten Perlpolymerisaten durch
i) Ausbilden einer Suspension von Saatpolymerisat und Monomergemisch in einer kontinuierlichen wässrigen Phase, wobei das Saatpolymerisat selber durch Verdüsen von Monomergemisch aus den Komponenten A) und B) oder A) und B) und C) in einer wässrigen Phase und anschließender Polymerisation hergestellt wird, oder einer hetero- oder homodispersen Suspension von Monomergemisch durch Rühren oder Verdüsen in einer wässrigen Phase,
ii) Polymerisieren des Monomergemisches im Saatpolymerisat oder der hetero- oder homodispersen Suspension zu einem Copolymerisat und
iii) Funktionalisieren des gebildeten Copolymerisats durch Sulfonierung, dadurch gekennzeichnet, dass man als Monomerengemisch
A) 67 bis 99,45 Gew.-% Styrol,
B) 0,05 bis 20 Gew.-% Vernetzer und
C) 0,5 bis 8 Gew.-% Vinylpyridine,
und bezogen auf 100 Gew.-Teile der Mischung aus A) + B) oder A) + B) + C) 0,1 bis 1,1 Gew.-Teile Polymerisationsinitiator einsetzt.

2. Verfahren gemäß Anspruch 1, dadurch gekennzeichnet, dass Vinylpyridine der Formel (I) 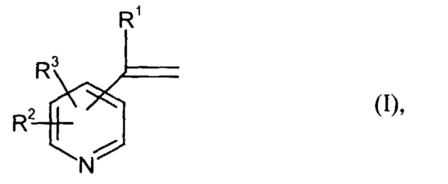 worin
R¹ für Wasserstoff oder Methyl steht,
R² und R³ unabhängig voneinander für Wasserstoff oder einen C₁-C₄-Alkyl-rest stehen, oder wenn
R² und R³ in ortho-Position zueinander stehen, diese für Glieder eines 5- bis 7-gliedrigen Rings stehen,
eingesetzt werden.

3. Verfahren gemäß Anspruch 1, dadurch gekennzeichnet, dass als Vernetzer Di- oder Trialkenylbenzole eingesetzt werden.

4. Verfahren gemäß Anspruch 1, dadurch gekennzeichnet, dass als weitere Monomere Vinylnaphthalin, Ethylstyrol, alpha-Methylstyrol, Chlorstyrole, Acryl-säure, Methacrylsäure, Acrylsäure-C₁-C₈-Alkylester, Methacrylsäure-C₁-C₈-Alkylester, Acrylnitril, Methacrylnitril, Acrylamid, Methacrylamid, Vinyl-chlorid, Vinylidenchlorid oder Vinylacetat eingesetzt werden.

5. Verfahren gemäß Anspruch 1, dadurch gekennzeichnet, dass als Polymerisationsinitiator Azobisisobutyronitril, Perester oder Percarbonate eingesetzt werden.

6. Sulfonierte Perlpolymerisate hergestellt nach dem Verfahren der Suspensionspolymerisation gemäß Anspruch 1.

7. Verwendung der Perlpolymerisate gemäß Anspruch 6 zur Herstellung von Kationenaustauschern.

8. Verfahren zur Verhinderung der Degradation von Kationenaustauschern durch Einsatz von Perlpolymerisaten gemäß Anspruch 6.

9. Verfahren zur Verhinderung von Korrosion durch entionisiertes Wasser, dadurch gekennzeichnet, dass man Kationenaustauscher einsetzt die aus Perlpolymerisaten gemäß Anspruch 6 hergestellt werden.

10. Copolymerisate hergestellt nach dem Verfahren der Suspensionspolymeri sation gemäß der Verfahrensschritte i) bis ii) gemäß Anspruch 1.
